(19) Europäisches Patentamt
European Patent Office
Office européen des brevets

(11) EP 2 780 402 B1

(12) EUROPÄISCHE PATENTSCHRIFT

(45) Veröffentlichungstag und Bekanntmachung des Hinweises auf die Patenterteilung:
**09.08.2017 Patentblatt 2017/32**

(51) Int Cl.:
***C08J 3/24*** (2006.01) ***C08F 220/18*** (2006.01)
***C09J 133/14*** (2006.01) ***C08F 2/38*** (2006.01)

(21) Anmeldenummer: **12769402.4**

(22) Anmeldetag: **28.09.2012**

(86) Internationale Anmeldenummer:
**PCT/EP2012/069292**

(87) Internationale Veröffentlichungsnummer:
**WO 2013/072121 (23.05.2013 Gazette 2013/21)**

# (54) VERFAHREN ZUR HERSTELLUNG VON KOHÄSIVEN POLYACRYLATKLEBEMASSEN MIT ENGER MOLMASSENVERTEILUNG

METHOD FOR PRODUCING COHESIVE POLYACRYLATE ADHESIVE COMPOUNDS WITH A NARROW MOLAR MASS DISTRIBUTION

PROCÉDÉ DE PRODUCTION DE SUBSTANCES ADHÉSIVES COHÉSIVES, À BASE DE POLYACRYLATE, AYANT UNE DISTRIBUTION ÉTROITE DES MASSES MOLAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2011 DE 102011086503**

(43) Veröffentlichungstag der Anmeldung:
**24.09.2014 Patentblatt 2014/39**

(73) Patentinhaber: **tesa SE**
**22848 Norderstedt (DE)**

(72) Erfinder: **PRENZEL, Alexander**
**20259 Hamburg (DE)**

(56) Entgegenhaltungen:
**WO-A1-2011/101175**

- **ANTOINE BOUSQUET ET AL: "Synthesis of comb polymers via grafting-onto macromolecules bearing pendant diene groups via the hetero-Diels-Alder-RAFT click concept", JOURNAL OF POLYMER SCIENCE PART A: POLYMER CHEMISTRY, Bd. 48, Nr. 8, 15. April 2010 (2010-04-15) , Seiten 1773-1781, XP055048351, ISSN: 0887-624X, DOI: 10.1002/pola.23943**
- **LEENA NEBHANI ET AL: "Quantification of Grafting Densities Achieved via Modular "Grafting-to" Approaches onto Divinylbenzene Microspheres", ADVANCED FUNCTIONAL MATERIALS, Bd. 20, Nr. 12, 23. Juni 2010 (2010-06-23) , Seiten 2010-2020, XP055048353, ISSN: 1616-301X, DOI: 10.1002/adfm.200902330**
- **ANDREW J. INGLIS ET AL: "Ultrafast Click Conjugation of Macromolecular Building Blocks at Ambient Temperature", ANGEWANDTE CHEMIE INTERNATIONAL EDITION, 17. Februar 2009 (2009-02-17), Seiten NA-NA, XP055018786, ISSN: 1433-7851, DOI: 10.1002/anie.200805993**

EP 2 780 402 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zur Molekulargewichtserhöhung von Polyacrylaten mit enger Molmassenverteilung für Haftklebemassen.

Für industrielle Haftklebeband-Anwendungen werden sehr häufig Polyacrylathaftklebemassen eingesetzt. Polyacrylate besitzen diverse Vorteile gegenüber anderen Elastomeren. Sie sind sehr stabil gegenüber UV-Licht, Sauerstoff und Ozon. Synthetische und Naturkautschukklebemassen enthalten zumeist Doppelbindungen, die diese Klebemassen gegen die vorher genannten Umwelteinflüsse labil machen. Ein weiterer Vorteil von Polyacrylaten ist ihre Transparenz und ihre Einsatzfähigkeit in einem relativ weiten Temperaturbereich.

Polyacrylathaftklebemassen werden in der Regel in Lösung durch eine freie radikalische Polymerisation hergestellt. Die Polyacrylate werden generell in Lösung über einen Streichbalken auf das entsprechende Trägermaterial beschichtet und anschließend getrocknet. Zur Steigerung der Kohäsion wird das Polymer in der Regel vernetzt. Die Härtung verläuft thermisch, durch UV-Vernetzung (ultraviolette Strahlung) oder durch ES-Härtung (ES: Elektronenstrahlung). Der beschriebene Prozess ist relativ kostenaufwendig und ökologisch bedenklich, da das Lösemittel in der Regel nicht recycelt wird und ein hoher Verbrauch an organischen Lösemitteln eine hohe Umweltbelastung bedeutet.

Zudem ist es sehr schwierig, Haftklebebänder mit hohem Masseauftrag blasenfrei herzustellen.

Durch einen Heißschmelz-Prozess (Hotmelt-Prozess) bietet sich ein alternatives Verfahren, das deutliche Verbesserungen bezüglich der vorgenannten Probleme bietet. Hier wird der Haftkleber in der Schmelze auf das Trägermaterial aufgetragen.

Mit dieser neuen Technik sind aber auch Einschränkungen verbunden. Vor der Beschichtung wird der Haftklebemasse das Lösemittel in einem Trocknungsextruder entzogen. Der Trocknungsprozess ist mit einer relativ hohen Temperatur und Schereinwirkung verbunden, so dass besonders hochmolekulare Polyacrylathaftklebemassen stark geschädigt werden. Die Acrylathaftklebemasse vergelt oder der niedermolekulare Anteil wird durch Molekulargewichtsabbau stark angereichert wird. Beide Effekte sind unerwünscht, da sie für die Anwendung nachteilig sind. Die Klebemasse lässt sich entweder nicht mehr beschichten oder die klebtechnischen Eigenschaften der Haftklebemasse verändern sich, da z.B. bei Einwirken einer Scherkraft auf die Klebmasse die niedermolekularen Anteile als Gleitmittel wirken und so zu einem vorzeitigen Versagen der Klebemasse führen.

Eine Lösung zur Verminderung dieser Nachteile bieten Polyacrylatklebemassen mit mittlerem niedrigen Molekulargewicht und enger Molekulargewichtsverteilung. Hier wird der Anteil an niedermolekularen und hochmolekularen Molekülen in dem Polymer durch den Polymerisationsprozess stark vermindert. Durch den Wegfall der hochmolekularen Anteile verringert sich die Fließviskosität, und die Masse zeigt eine geringere Tendenz zur Vergelung. Durch die Absenkung des niedermolekularen Anteils wird die Anzahl der Oligomere verringert, die die Scherfestigkeit der Haftklebemasse verringern.

Zur Herstellung von niedermolekularen Haftklebemassen sind verschiedene Polymerisationsmethoden geeignet. Stand der Technik ist der Einsatz von Reglern, wie z.B. von Alkoholen oder Thiolen. Diese Regler reduzieren das Molekulargewicht, aber verbreitern die Molekulargewichtsverteilung.

Als eine weitere kontrollierte Polymerisationsmethode wird die Atom Transfer Radical Polymerization ATRP eingesetzt, wobei als Initiator bevorzugt monofunktionelle oder difunktionelle sekundäre oder tertiäre Halogenide und zur Abstraktion des(r) Halogenids(e) bestimmte Metall-Komplexe eingesetzt werden. Generell beeinflussen die eingesetzten Metallkatalysatoren als Nebenwirkung jedoch die Alterung der Haftklebemassen negativ (Vergelung, Umesterung). Zudem sind die meisten Metallkatalysatoren giftig, verfärben die Klebemasse und lassen sich nur durch aufwendige Fällungen aus dem Polymer entfernen.

Andere kontrollierte radikalische Polymerisationsverfahren nutzen als Initiator beispielweise eine Verbindung der Formel R'R"N-O-X, worin X eine freie radikalische Spezies darstellt, die ungesättigte Monomere polymerisieren kann, sehr spezielle Radikalverbindungen, wie z.B. Phosphor-enthaltende Nitroxide oder spezielle Nitroxyle, die auf Imidazolidin, Morpholinen, Piperazinonen oder Piperazindionen basieren. Die Reaktionen weisen aber im Allgemeinen geringe Umsatzraten aus, insbesondere bei der Polymerisation von Acrylaten, die nur zu sehr geringen Ausbeuten und Molekulargewichten führt, und/oder es werden höhere Temperaturen benötigt, um das Gleichgewicht zwischen der "schlafenden" und der aktiven Radikalspezies auf die Seite der aktiven zu verschieben und um somit die Nettoreaktionsgeschwindigkeit zu erhöhen. Die Wahl der Lösungsmittel ist somit eher auf hochsiedende Lösungsmittel beschränkt. Ein geeignetes Verfahren zur Herstellung engverteilter Polymere ist der so genannte RAFT-Prozess (Reversible Addition-Fragmentation Chain Transfer), beschrieben beispielsweise in den Schriften WO 98/01478 A1 und WO 99/31144 A1. Der dort beschriebene Prozess eignet sich nicht ohne Weiteres zur Herstellung von Haftklebemassen, da die erzielten Umsätze sehr gering sind und das mittlere Molekulargewicht der hergestellten Polymere zu niedrig für Haftklebemassen, insbesondere auf Acrylatbasis. Die derart erzeugten Polymere lassen sich somit nicht als Acrylathaftklebemassen einsetzen.

Weiterentwicklungen dieses Prozesses durch die Einführung von Thioestern oder Trithiocarbonaten sind Gegenstand der Forschung. So beschreibt die EP 1 626 994 A1 verbesserte RAFT-Regler, mit denen Polyacrylathaftklebemassen für Hotmelt-Beschichtungen hergestellt werden konnten. Der RAFT-Prozess weist gegenüber der ATRP und der Nitroxyl-kontrollierten Polymerisation deutliche Vorteile auf, da keine Absenkung der Reaktionsgeschwindigkeit in Kauf genommen werden muss, keine teuren und teilweise instabilen Katalysatoren eingesetzt werden müssen und die RAFT-Regler universeller einsetzbar sind.

Dennoch weisen generell mittels derartiger schwefelhaltiger RAFT-Reagenzien erhaltene Acrylathaftklebemassen für viele Anwendungsbereiche Nachteile auf. Mit RAFT-Reglern hergestellte Polymere, insbesondere (Haft-)Klebemassen, weisen zwar sehr definierte Polymeraufbauten und Polydispersitäten auf und sind daher bezüglich ihrer klebtechnischen Eigenschaften sehr gut justierbar. Die Molmassen der derart erhältlichen Polymere sind verfahrensbedingt limitiert, so dass die hergestellten Polyacrylate in der Regel die für (Haft-)Klebemassen notwendige Kohäsion nicht aufweisen. Rzayev und Penelle haben sich mit dem Problem beschäftigt, hohe Molmassen mit einer engen Molmassenverteilung zu erzielen und zeigen, dass dieses Ergebnis mittels RAFT-Polymerisation zwar bei sehr hohen Drücken erreicht werden kann (Angew. Chem. Int. Ed. 2004, 43, 1691), jedoch ist hier die praktische Durchführbarkeit schwierig und der Prozess ist deutlich kostenintensiver. Zhang *et al.* haben ein Verfahren entwickelt, in dem bei Abwesenheit eines Radikalinitiators die Polymerisation ausschließlich thermisch initiiert wird, jedoch ist die Reaktionsgeschwindigkeit durch die geringe Radikalkonzentration sehr niedrig, wodurch hohe Umsätze erst nach Tagen erzielt werden (Polymer 2006, 47, 6970).

Die Abhandlung "Synthesis of Comb Polymers via Grafting-Onto Macromolecules Bearing Pendant Diene Groups via Hetero-Diels-Alder-RAFT Click Concept" (Bousquet, Barner-Kowollik, Stenzel; Journal of Polymer Science Part A: Polymer Chemistry, 48, Nr. 8 (2010), Seiten 1773 - 1781) beschreibt die Verwendung von Diels-Alder-Reaktionen zur Synthese von Kammpolymeren. Haftklebemassen werden dort nicht erwähnt, insbesondere auch keine Hinweise für die Herstellung im Wesentlichen nicht verfärbter Haftklebemassen gegeben.

Diels-Alder-Reaktionen in Verbindung mit Klebmassen beschreibt beispielweise die WO 2011/101175, nämlich eine mittel Diels-Alder- oder Hetero-Diels-Alder-Reaktion schaltbare Formulierung, die eine Komponente mit zwei dienophilen Doppelbindungen sowie eine Verbindung mit zwei Dien-Funktionalitäten enthält, wobei mindestens eine dieser Komponenten ein Polymer ist; die Formulierung kann unter anderem als Klebstoff verwendet werden.

Die Kohäsion kann zwar im Anschluss über die Vernetzung eingestellt werden, jedoch werden gerade für Hotmelt-Prozesse spezielle Vernetzungsverfahren benötigt, wie in DE 10 2004 044 086 A1, US 2003/0 068 492 A1 und EP 1 978 069 A1 beschrieben, und das durch die Vernetzung erzeugte kovalente oder koordinative Netzwerk wirkt sich in anderer Weise auf die Eigenschaften der Klebemasse aus als eine Erhöhung der Molmassen. Hohe Vernetzerkonzentrationen bergen die Gefahr der Vergeluhg im Hotmelt-Prozess und/oder die Gefahr der Übervernetzung.

Aufgabe der Erfindung ist es daher, ein Polymerisationsverfahren zur Verfügung zu stellen, mit dem sich Polyacrylate mit enger Molekulargewichtsverteilung, aber dennoch relativ hohen Molmassen herstellen lassen; so dass die daraus resultierenden Polyacrylatklebemassen und Klebebänder bestehend aus diesen Polyacrylatklebemassen eine ausreichende Kohäsion aufweisen.

Überraschenderweise wurde gefunden, das durch die Kombination eines RAFT-Prozesses mit anschließender Umsetzung der Polymere mit Dienylverbindungen, insbesondere mit Bisdienylverbindungen, eng verteilte Polyacrylathaftklebemassensysteme erhalten wurden, die eine erhöhte Kohäsion aufweisen und - gegebenenfalls nach geeigneter Additivierung - hervorragend als Klebemassen, insbesondere als Haftklebemassen eingesetzt werden können.

Die Erfindung betrifft daher ein Verfahren zur Herstellung von Haftklebemassen auf Acrylatbasis, in dem Polymere auf Acrylatbasis hergestellt werden, wobei zunächst eine kontrollierte radikalische Polymerisationsreaktion einer Reaktionsvorlage umfassend zumindest ein Monomer auf Acrylatbasis, also eines Monomers auf Acrylatbasis oder einer Monomermischung enthaltend zumindest ein Monomer auf Acrylatbasis, jeweils üblicherweise in Anwesenheit von Lösemitteln, in Anwesenheit zumindest einer Reglersubstanz mit einer funktionellen Gruppe S-C=X, wobei X = S, O oder N, durchgeführt wird, wobei die Reglersübstanz aus der Gruppe umfassend

Dithioester, also Verbindungen der allgemeinen Struktur

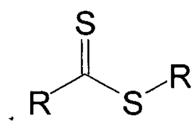 ,

Dithiocarbonate, und zwar sowohl S,S'-substituierte Dithiocarbonate, also Verbindungen der allgemeinen Struktur

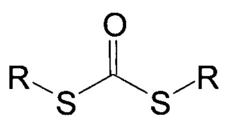 ,

als auch Xanthate (O,S-substituierte Dithiocarbonate), also Verbindungen der allgemeinen Struktur

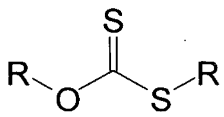
,

Dithiocarbamate, also Verbindungen der allgemeinen Struktur

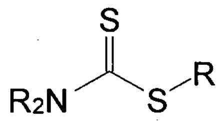
,

Trithiocarbonate, also Verbindungen der allgemeinen Struktur

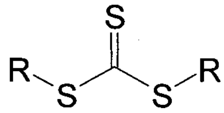

und Imido-Dithio-Carbonate, also Verbindungen der allgemeinen Struktur

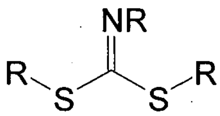

gewählt ist, wobei vorstehend R allgemein und unabhängig voneinander gewählt organische Reste oder ggf. auch anorganische Reste darstellt (die Mitglieder der genannten Gruppe an Regler-Substanzen werden im Rahmen dieser Schrift auch als "RAFT-Regler" oder als Polymerisationsregler bezeichnet).

Dabei wird die Mehrzahl der Reglersubstanz-Moleküle, insbesondere werden nahezu alle Reglersubstanz-Moleküle, derart in die entstehenden Polymerketten eingebaut, dass die jeweilige Polymerkette zumindest eine funktionelle Gruppe eines in ihr eingebauten Reglers aufweist. Erfindungsgemäß werden die derart erhaltenen Polymere in Kontakt mit einer chemischen Verbindung gebracht, die zumindest zwei Bausteine ("Dien-Bausteine") umfasst, die jeweils zwei konjugierte Doppelbindungen aufweisen. Im Folgenden werden chemische Verbindungen umfassend einen Dien-Baustein auch als "Dienyl-Verbindung" und chemische Verbindungen umfassend zumindest zwei Dien-Bausteine auch als "Bisdienyl-Verbindung" bezeichnet. Zwischen den konjugierten Doppelbindungen der beiden Dien-Bausteine eines Bisdienyl-Moleküls und jeweils einer Doppelbindung C=X der funktionellen Gruppe S-C=X jeweils einer Polymerkette werden erfindungsgemäß Hetero-Diels-Alder-Reaktionen bewirkt, so dass zumindest zwei Polymerketten mittels der Dienyl-Verbindung verknüpft werden, gemäß des allgemeinen Schemas jeder Verknüpfung

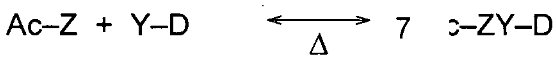


(I)

Wird der Gerüstbaustein D der Dienylverbindung als längere Kette gewählt, lassen sich auf diese Weise ebenfalls Molmassenerhöhungen bewirken. So kann beispielweise auch D eine Polkyacrylatkette sein, oder es können Blockcopolymere der Form P(A)-P(B) erzeugt werden, wenn D sich von Ac unterscheidet. Durch andere Wahl von D, etwa als kurzkettiger Rest oder nicht polymerer Rest, lassen sich weitere Moleküle designen, zum Beispiel funktionelle Gruppen an das Polyacrylat Ac anknüpfen.

Mit dem Begriff "Reaktionsvorlage" werden im Rahmen dieser Schrift die zur Polymerisation eingesetzten Ausgangsstoffe bezeichnet, dies können je nach Sachlage ein Monomer (zur Herstellung von Homopolymeren) oder eine Monomermischung (zur Herstellung von Copolymeren) sein. Weiterhin können zur Polymerisation gegebenenfalls weitere Zusatzstoffe (wie Initiatoren, Regler und dergleichen), bei einer Lösemittelpolymerisation oder einer Dispersionspolymerisation zusätzlich das bzw. die Lösemittel bzw. das oder die Dispersionsmittel zugegen sein.

Hier und im Folgenden werden die Bausteine umfassend zumindest zwei konjugierte Doppelbindungen auch

als "Dien-Bausteine" und die chemische Verbindung umfassend zumindest einen Dien-Baustein als "Dienyl-Verbindung", die Verbindungen umfassend zumindest zwei Dien-Bausteine auch als "Bisdienyl-Verbindung" bezeichnet, wobei die Benennung als "Dienyl" bzw. als "***Bis***dienyl" nicht ausschließen soll, dass gegebenenfalls auch mehr als einer bzw. zwei Dien-Bausteine im jeweiligen Molekül vorhanden sein können, so dass im Rahmen dieser Schrift auch Multidienylverbindungen von der Bezeichnung Dienylverbindung bzw. Bisdienylverbindung umfasst sein sollen, sofern konkret nichts anderes dargestellt ist. Entsprechend werden Bisdienylverbindung von der Bezeichnung "Dienylverbndung" mit umfasst, sofern nicht anders gekennzeichnet. Die Bezeichnung "(Bis-)Dienylverbindungen" umfasst entsprechend Dienylverbindungen aller Art mit besonderer Bevorzugung der Bisdienylverbindungen.

Wenn im Rahmen dieser Schrift von "einer chemischen Verbindung" oder "einer chemischen Substanz" - wie zum Beispiel auch einem Monomer, einem Regler, einer Reglersubstanz, einem Initiator oder dergleichen - die Rede ist, so ist damit nicht das einzelne Molekül, sondern die Art dieser chemischen Verbindung bzw. Substanz gemeint, also die jeweilige Gruppe identischer Moleküle. Sofern das einzelne Molekül gemeint ist, wird von dem Molekül der entsprechenden chemischen Substanz gesprochen (also zum Beispiel von einem Monomer-Molekül, einem Regler-Molekül, einem Reglersubstanz-Molekül beziehungsweise einem Intiiator-Molekül). Dementsprechend bedeutet der Ausdruck "mehrere chemische Verbindungen" (beispielweise auch mehrere Monomere, mehrere Regler und so weiter) mehrere Gruppen jeweils identischer Moleküle (beispielweise bedeutet "mehrere Monomere" mehrere Gruppen jeweils identischer Monomer-Moleküle in der jeweiligen Gruppe, wobei sich die Monomer-Moleküle zwischen den jeweiligen Gruppen unterscheiden; "mehrere Regler" mehrere Gruppen jeweils identischer Regler-Moleküle in der jeweiligen Gruppe, wobei sich die Regler-Moleküle zwischen den jeweiligen Gruppen unterscheiden; usw.). Wird hingegen von einer funktionellen Gruppe gesprochen, so ist damit, sofern im Einzelnen nichts anderes dargestellt ist, die individuelle funktionelle Gruppe gemeint.

Das erfindungsgemäße Verfahren ermöglicht die Herstellung wohldefinierter AcrylatPolymere, die hervorragend als Klebemassen, insbesondere als Haftklebemassen, eingesetzt oder zu diesen weiterverarbeitet werden können.

Unter dem Begriff "Haftklebemasse" (PSA; englisch: "pressure sensitive adhesives") werden wie üblich solche viskoelastischen, polymeren Massen verstanden, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und permanent klebfähig sind und an einer Vielzahl von Oberflächen bei Kontakt anhaften, insbesondere sofort anhaften (die einen sogenannten "Tack" [auch als Klebrigkeit oder Anfassklebrigkeit bezeichnet] aufweisen). Sie sind in der Lage, bereits bei der Anwendungstemperatur ohne eine Aktivierung durch Lösemittel oder durch Wärme - gegebenenfalls unter Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können.

Bei der dabei stattfindenden Hetero-Diels-Alder-Reaktion zwischen der funktionellen Gruppe (Z) aus dem RAFT-Regler und der Dienkomponente (Y) handelt es sich um eine Gleichgewichtsreaktion (siehe Gleichung (I) oben und (II) nachstehend). In den Gleichungen (I) und (II) stehen die Abkürzungen Ac für Polyacrylat, ZY für das Hetero-Diels-Alder-Addukt zwischen dem Dien und dem RAFT-Regler-Rest und D für das den Gerüstbaustein des Dienyls Y-D bzw. des Bisdienyls Y-D-Y.

$$\text{Ac–Z + Y–D–Y + Z–Ac} \underset{\Delta}{\longleftrightarrow} \text{Ac–ZY–D–YZ–Ac} \qquad \text{(II)}$$

Eine Erhöhung der Temperatur begünstigt die Retro-Hetero-Diels-Alder-Reaktion, wodurch das Gleichgewicht sich auf die linke Seite der Reaktionsgleichung verschiebt und eventuell bereist gebildete Ketten Ac-ZY-D-YZ-Ac wieder in kürzere Fragmente zerfallen. Die Zugabe der Bisdienyl-Verbindung kann somit im Falle eines Hotmelt-Prozesses noch in Lösung vor der Entfernung des Lösungsmittels oder in der Schmelze erfolgen, da bei den hohen Temperaturen, die zum Transport, der Verarbeitung und der Beschichtung des lösungsmittelfreien Polymers benötigt werden, das Gleichgewicht auf Seiten der Edukte liegt, die Kohäsion gering bleibt und somit die weitere Prozessierbarkeit nicht gestört wird. Die kurzen Polyacrylatketten weisen eine geringe Schmelzeviskosität auf, wodurch keine Probleme und keine wesentlichen Unterschiede zur Fahrweise ohne das Vorhandensein der Bisdienyl-Verbindung bei der Schmelzeverarbeitung resultieren. Sobald die Schmelze abkühlt, verschiebt sich das Gleichgewicht auf die Seite der Hetero-Diels-Alder-Addukte. Die sich dadurch ergebende Erhöhung der Molmassen der Polyacrylate (in der Regel kommt es zu Molekulargewichten, die mehr als doppelt so hoch sind wie die der Ausgangspolymere) führt zu Polyacrylaten mit einer deutlich gesteigerten Kohäsion.

Insbesondere vorteilhaft wird die Bisdienylverbindung derart gewählt, dass zumindest zwei der vorhandenen Dienbausteine endständig angeordnet sind, so dass es sich bei der Bisdienyl-Verbindung um eine $\alpha,\omega$-Bisdienyl-Verbindung handelt. Da verfahrensbedingt die in die Polymere eingebaute Reste der RAFT-Regler ebenfalls endständig angeordnet sind, lassen sich auf diese Weise zwei Polymerketten über eine $\alpha,\omega$-Bisdienyl-Verbindung linear miteinander

verknüpfen.

Wird der Gerüstbaustein D der Bisdienyl-Verbindung sehr kurzkettig gewählt (D kann dabei komplett entfallen, wenn die beiden Dien-Bausteine direkt aneinander grenzen), so lässt sich mit dieser Reaktion quasi eine Verdoppelung des Molekulargewichtes der Polyacrylat-Makromoleküle bewirken.

In einer anderen bevorzugten Ausführungsform der Erfindung wird für den Rest D in Gleichung (I) ein polymerer Baustein gewählt, so dass A-B-A-Triblockcopolymere hergestellt werden können (die Polymerblöcke des Typs A stammen dabei aus den durch die RAFT-Reaktion erhältlichen Polyacrylaten Ac und die Polymerblöcke des Typs B aus dem polymeren Baustein D der Bisdienylverbindung). Hierbei kann D vorteilhaft gewählt sein aus der Gruppe der Polystyrole, Polyethylenglykole, Polypropylenglykole, Silikone, Polyurethane, Polyester, Polyamide, Polycarbonate, Poly(meth)acrylate, Natur- und Synthesekautschuke, wobei diese Aufzählung nur beispielhaft und nicht einschränkend ist.

In einer Weiterentwicklung des erfindungsgemäßen Verfahrens weist die Bisdienylverbindung mehr als zwei Dienbausteine auf. Je nach Aufbau des Gerüstbausteins einer solchen Bisdienylverbindung können alle Dienbausteine endständig an Polymerarmen vorgesehen sein. Solche Verbindungen eignen sich hervorragend durch eine entsprechende Zahl von Hetero-Diels-Alder-Reaktionen mit entsprechend vielen Polyacrylat-Makromolekülen zum Aufbau sternförmiger Polymer. Durch Bisdienylverbindungen mit zwei endständigen Dienbausteinen und einem oder mehreren Dienbausteinen, die aus dem Gerüstbaustein herausragen, lassen sich Kammpolymere erzeugen. Durch Wahl von Anzahl und Lage der Dienbausteine sowie des Charakters des Gerüstbausteins der Bisdienylverbindung lassen sich durch das erfindungsgemäße Verfahren eine Vielzahl von verzweigten Polymeren unterschieldichen Aufbaus und unterschiedlicher Molekulargewichte erzeugen, die auf die mittels des RAFT-Verfahrens erhältlichen Polyacrylat-Makromoleküle zurückzuführen sind.

Gegenstand der Erfindung sind weiterhin die durch das erfindungsgemäße Verfahren erhältlichen Haftklebemassen.

Die resultierenden Produkte aus der Hetero-Diels-Alder-Reaktion mit der Dienylverbindung werden jeweils mindestens einen Cyclo-1-X-hex-3-en-Baustein in den Polymerketten, mit X = S, O und/oder N, aufweisen. Durch die Reaktion mit den Bisdienylverbindungen weisen die erhaltenen Polymere, insbesondere die Klebemassen bzw. Haftklebemassen, zumindest zwei Cyclo-1-X-hex-3-en-Bausteine in den Polymerketten auf. Die Hex-3-en-Teilbausteine können gegebenenfalls auch durch Heteroatome substituiert sein (Je nach eingesetzten Dienbausteinen in den Bisdienylverbindungen). Weiter sind Gegenstand der Erfindung daher Haftklebemassen umfassend Polymere auf Acrylatbasis, die zumindest einen, bevorzugt mindestens zwei Cyclo-1-X-hex-3-en-Bausteine mit X = S, O oder N in den Polymerketten enthalten, insbesondere solche Haftklebemassen umfassend Polymere dieser Art erhältlich durch das erfindungsgemäße Verfahren.

Durch den Aufbau der Molmasse mittels Hetero-Diels-Alder-Reaktion kann die Kohasion des erhaltenen Polymers vorteilhaft erhöht werden, wobei eine gleichzeitige Abnahme der Adhäsion - wie sie im Falle der Kohäsionserhöhung durch die Verwendung von Vernetzern üblicherweise auftritt - nicht eintritt. Für entsprechend dargestellte sternförmige Polymere - insbesondere durch Verwendung entsprechender Multidienylverbindungen - wird sogar eine erhöhte Adhäsion festgestellt, da diese Polymere eine größere Anzahl freier Kettenenden aufweisen. Im Falle sehr verzweigter sternförmiger Polymere findet teilweise wieder eine (relative) Kohäsionsabnahme statt, so dass über die Wahl des Verzweigungsgrades auch die tatsächliche Kohäsion des Endproduktes eingestellt werden kann. Hierdurch können die Produkteigenschaften vorteilhaft justiert werden.

## Detaillierte Beschreibung der Erfindung

Die Polymerisation wird vorteilhaft durch einen oder mehrere radikalische Initiatoren initiiert. Als radikalische Initiatoren zur Polymerisation eignen sich insbesondere thermisch zerfallende Initiatoren, besonders radikalbildende Azo-oder Peroxo-Initiatoren. Der bzw. die Inititiatoren werden bevorzugt vor und/oder im Verlauf der Polymerisation zugesetzt. Bevorzugt ist eine mehrfache Initiierung, bei welcher eine erste InitiatorZugabe vor oder zu Beginn der Polymerisation erfolgt und bei der im Verlaufe der Polymerisation zumindest eine weitere Inititatorzugabe erfolgt; wobei vorteilhaft die Zugabe weiterer Initiatoren in mindestens zwei Verfahrensstufen erfolgt. Dabei kann in jedem Zugabeschritt der zuerst eingesetzte Initiator, ein bereits zuvor eingesetzter Initiator oder ein anderer Initiator eingesetzt werden. Prinzipiell eignen sich alle für Acrylate bekannten üblichen Initiatoren.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di*tert*-butylperoxid, Azo-bis-(isobutyronitril), Cyclohexylsulfonylacetylperoxid, Diisopropylpercarbonat, Bis(4-*tert*-butylcyclohexyl)peroxydicarbonat (Perkadox® 16 der Fa. Akzo Nobel), *tert*-Butylperoktoat, Benzpinacol. In einer sehr bevorzugten Auslegung werden als radikalische Initiatoren 2,2'-Azo-bis-(2-methylbutyronitril) (Vazo 67® der Fa. DuPont) und/oder 1,1'-Azo-bis-(cyclohexancarbonsäurenitril) (Vazo 88® der Fa. DuPont) verwendet.

Weiterhin können auch Radikalquellen verwendet werden, die erst unter Bestrahlung mit UV-Licht Radikale

freisetzen.

Zur Initiierung der Polymerisation ist für die thermisch zerfallenden Initiatoren der Eintrag von Wärme essentiell. Die Polymerisation kann für die thermisch zerfallenden Initiatoren insbesondere durch Erwärmen auf 50 bis 160 °C, je nach Initiatortyp, initiiert werden. Für den Einsatz von UV-Initiatoren wird mit UV-Licht der geeigneten Wellenlänge eingestrahlt. Diese Reaktion kann insbesondere in einem Temperaturbereich von 0 °C bis 150 °C durchgeführt werden.

In einer vorteilhaften Entwicklung des Verfahrens wird die Polymerisation - insbesondere mit Initiierung durch zumindest einen radikalischen Initiator - mit zumindest einem Dithioester bzw. einem Trithiocarbonat als Polymerisationsregler durchgeführt. In einer bevorzugten Variante des erfinderischen Verfahrens werden als RAFT-Regler Verbindungen der folgenden allgemeinen Strukturformel

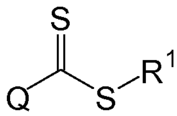

(III)

eingesetzt, wobei Q und $R^1$ unabhängig voneinander gewählt sind und Q bevorzugt ein Rest aus einer der Gruppen a) bis n) und $R^1$ bevorzugt ein Rest aus einer der Gruppen a), c) bis f) oder h) ist:

a) verzweigte und unverzweigte $C_1$-bis $C_{18}$-Alkyl-, verzweigte und unverzweigte $C_3$-bis $C_{18}$-Alkenyl-, verzweigte und unverzweigte $C_3$- bis $C_{18}$-Alkinylreste
b) Ethenyl- und Ethinylreste
c) nicht kondensierte und kondensierte Arylreste, besonders $C_6$- bis $C_{18}$-Arylreste, insbesondere unsubstituierte oder substituierte Phenylreste, unsubstituierte oder substituierte Benzylreste
d) aliphatische heterocyclische Reste, insbesondere $C_3$- bis $C_{12}$-Cycloalkylreste
e) aromatische heterocyclische Reste
f) substituierte Reste der Gruppe a), insbesondere

f1) jeweils durch zumindest eine OH-Gruppe, ein Halogenatom oder einen Silylether substituierte Reste der Gruppe a),
f2) jeweils durch zumindest eine Ester-, Amin-, Carbonat-, Cyano-, Isocyano-und/oder Epoxidgruppe und/oder mit Schwefel substituierte Reste der Gruppe a),

g) substituierte Reste der Gruppe a), insbesondere

g1) jeweils durch zumindest eine OH-Gruppe, ein Halogenatom oder einen Silylether substituierte Reste der Gruppe b),
g2) jeweils durch zumindest eine Ester-, Amin-, Carbonat-, Cyano-, Isocyano-und/oder Epoxidgruppe und/oder mit Schwefel substituierte Reste der Gruppe b),

h) $-NH_2$, $-NHR^I$, $-NR^IR^{II}$, $-NH-C(O)-R^I$, $-NR^I-C(O)-R^{II}$, $-NH-C(S)-R^I$, $-NR^I-C(S)-R^{II}$,

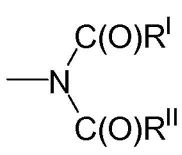 , 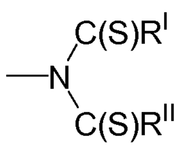 , 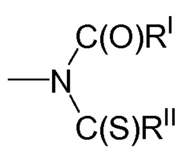

wobei $R^I$ und $R^{II}$ unabhängig voneinander gewählte Reste aus den Gruppe a) bis g) sind
i) $-S-R^I$, $-S-C(S)-R^I$, wobei $R^I$ ein Rest gewählt aus einer der Gruppen a) bis g) ist,
k) $-O-R^I$, $-O-C(O)-R^I$, wobei $R^I$ ein Rest gewählt aus einer der Gruppen a) bis g) ist,
l) Phosphatgruppenhaltige Reste, insbesondere $-P(O)(OR^{III})(OR^{IV})$, wobei $R^{III}$ und $R^{IV}$ identisch oder unabhängig voneinander gewählte Reste aus den Gruppen a) bis g) sind,
m) $C_2$- bis $C_{18}$-Hetero-Alkylreste mit mindestens einem O-Atom und/oder mindestens einer $NR^I$-Gruppe in der Kohlenstoffkette, wobei $R^I$ ein Rest gewählt aus einer der Gruppen a) bis g) ist,
n) Wasserstoff.

Die genannten Substituenten-Auflistungen dienen nur als Beispiele für die jeweiligen Verbindungsgruppen und besitzen keinen Anspruch auf Vollständigkeit.

Weiterhin sind auch Verbindungen der folgenden Typen

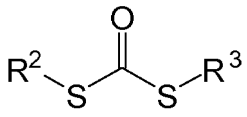

(IV)

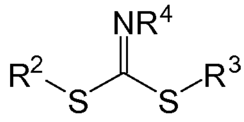

(V)

als Polymerisationsregler geeignet, wobei $R^2$, $R^3$ und $R^4$ unabhängig voneinander gewählt sind aus den Gruppen a) bis m).

In besonders bevorzugter erfindungsgemäßer Vorgehensweise werden folgende Verbindungen als Polymerisationsregler eingesetzt, wobei $R^2$, $R^{III}$ und $R^{IV}$ wie vorstehend definiert sind.

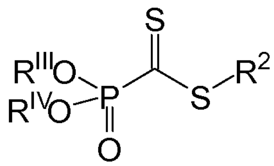

(VI)

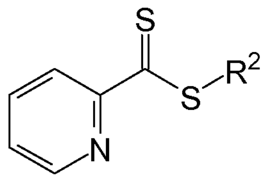

(VII)

Sehr vorteilhaft wird die Menge der RAFT-Regler derart gewählt, das sie in Summe mit einem (Gesamt-)Gewichts-Anteil von 0,001 % - 5 %, insbesondere von 0,025 % bis 0,25 % eingesetzt, bezogen auf die Monomere.

Zudem ist es im erfinderischen Sinne sehr günstig, wenn das molare Verhältnis von zuerst zugesetztem radikalischen Initiator (erster Zugabeschritt) zur Menge aller RAFT-Regler im Bereich von 50 : 1 bis 1 : 1, insbesondere zwischen 10 : 1 und 2 : 1 liegt.

Besonders hervorragend ist das Verfahren geeignet zur Herstellung von Polymeren auf Acrylatbasis, also solchen Polymeren, die zum Teil, insbesondere zum überwiegenden Teil (also zu mehr als 50 Gew.-%), auf Acrylsäure, Methacrylsäure, Acrylsäureestern und/oder Methacrylsäureestern als Monomeren (im folgenden gemeinschaftlich als "Acrylmopnomere" bezeichnet) zurückzuführen sind (sofern im Rahmen dieser Schrift allgemein von "Acryl..." oder "Acrylat..." die Rede ist, sollen darin die entsprechenden methylsubstituierten Derivate, also die Methacrylverbindungen, mit enthalten sein, sofern dies im Einzelnen nicht anders dargestellt ist). Gleichsam umfasst der Ausdruck "(Meth)Acryl..." die entsprechenden Acrylverbindungen und die entsprechenden Methacrylverbindungen.

Besonders geeignet ist das Verfahren zur Herstellung von Acrylathaftklebemassen. Haftklebemassen bestehen üblicherweise aus einer Polymerkomponente, auch als Basispolymerkomponente bezeichnet, die ein Homopolymer, ein Copolymer oder eine Mischung aus Polymeren (Homopolymeren und/oder Copolymeren) sein kann. Die Zusammensetzung der Polymerkomponente kann je nach gewünschten Eigenschaften der Haftklebemasse gewählt werden. Üblicherweise werden der Basispolymerkomponente weitere Zusätze zum Teil in erheblichem Umfang zugesetzt, um die gewünschten Eigenschaften des Endproduktes (der Haftklebemasse) zu erhalten. Häufig werden Haftklebemassen vernetzt, um eine hinreichende Kohäsion zu bewirken.

Erfindungsgemäß vorteilhaft wird von einer Reaktionsvorlage, insbesondere einer Monomermischung, ausgegangen, in welcher ethylenisch ungesättigten Verbindungen, insbesondere aus (Meth-)Acrylsäure und/oder deren Derivate, vorliegen, wobei diese unter Einsatz von RAFT-Reglern radikalisch über einen RAFT-Prozess polymerisiert wird.

Die Polymerkomponente der Polyacrylathaftklebemasse umfasst vorteilhaft ein oder mehrere Polyacrylate, jeweils erhältlich durch (Co-)Polymerisation von

(a1) 70 bis 100 Gew.-% Acrylsäureester und/oder Methacrylsäureester und/oder deren freien Säuren mit der Formel

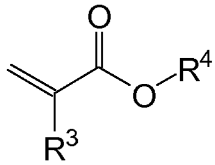

(VIII)

,

wobei $R^3$ = H und/oder $CH_3$ darstellt und $R^4$ = H und/oder Alkylketten mit 1 bis 30 C-Atomen darstellt, mit
(a2) 0 bis 30 Gew.-% olefinisch ungesättigte Monomere mit funktionellen Gruppen.

Die Gewichtsangaben beziehen sich auf das jeweilige Polyacrylat.

Vorzugsweise werden für die Monomere (a1) Acryl- und/oder Methacrylsäureester mit Alkylgruppen mit 1 bis 14 C-Atomen eingesetzt. Diese Acrylmonomere können beispielweise und vorteilhaft gewählt werden aus der folgenden Liste, umfassend Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat, und deren verzweigten Isomere, wie z. B. 2-Ethylhexylacrylat. Weitere einzusetzende Verbindungsklassen, die ebenfalls in geringen Mengen unter (a1) hinzugesetzt werden können, sind Cyclohexylmethacrylate, Isobornylacrylat und Isobornylmethacrylate.

Beispielweise und vorzugsweise werden für (a2) Monomere der folgenden Liste verwendet, umfassend Maleinsäureanhydrid, Itaconsäureanhydrid, Glycidylmethacrylat, Benzylacrylat, Benzylmethacrylat, Phenylacrylat, Phenylmethacrylat, *tert*-Butylphenylacrylat, *tert*-Butylphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat und Tetrahydrofufurylacrylat, Hydroxyethylacrylat,3-Hydroxypropylacrylat, Hydroxyethylmethacrylat, 3-Hydroxypropylmethacrylat, 4-Hydroxybutylacrylat, 4-Hydroxybutylmethacrylat, Allylalkohol, Itaconsäure, Acrylamid und Cyanoethylmethacrylat, Cyanoethylacrylat, 6-Hydroxyhexylmethacrylat, *N-tert*-Butylacrylamid, *N*-Methylolmethacrylamid, N-(Butoxymethyl)methacrylamid, *N*-Methylolacrylamid, *N*-(Ethoxymethyl)acrylamid, *N*-Isopropylacrylamid, Vinylessigsäure, β-Acryloyloxypropionsäure, Trichloracrylsäure, Fumarsäure, Crotonsäure, Aconitsäure, Dirnethylacrylsäure, 4-Vinylbenzoesäure, wobei diese Aufzählung nicht abschließend ist.

Ebenso bevorzugt werden für die Komponente (a2) aromatische Vinylverbindungen eingesetzt, wobei die aromatischen Kerne bevorzugt auf C4- bis C18-Bausteinen basieren, aber auch Heteroatome enthalten können. Besonders bevorzugte Beispiele sind Styrol, 4-Vinylpyridin, *N*-Vinylphthalimid, Methylstyrol und 3,4-Dimethoxystyrol, wobei diese Aufzählung nicht abschließend ist.

Zur Polymerisation werden die Monomere dermaßen gewählt, dass die resultierenden Polymere als thermisch vernetzbare Haftklebemassen eingesetzt werden können, insbesondere derart, dass die resultierenden Polymere haftklebende Eigenschaften entsprechend dem "Handbook of Pressure Sensitive Adhesive Technology" von Donatas Satas (van Nostrand, New York 1989) besitzen.

Die Art der Comonomere wird so gewählt, dass die Glasübergangstemperatur $T_{G,A}$ der Polymere (als Glasübergangstemperaturen werden im Rahmen dieser Schrift die über Dynamische Differenzkalorimetrie (DSC) nach DIN 53765 bestimmbaren statischen Glasübergangstemperaturen verstanden; die Angaben zur Glasübergangstemperatur $T_G$ im Rahmen dieser Schrift beziehen sich auf den Glasumwandlungstemperatur-Wert Tg nach DIN 53765:1994-03, sofern im Einzelfall nichts anderes angegeben ist) unterhalb der Anwendungstemperatur, bevorzugt bei $T_{G,A}$ <= 15 °C liegt. Um dies zu erreichen, wird weiterhin die mengenmäßige Zusammensetzung der Monomermischung vorteilhaft derart gewählt, dass sich nach der Fox-Gleichung (G1) (vgl. T.G. Fox, Bull. Am. Phys. Soc. 1956, 1, 123) der gewünschte $T_{G,A}$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind beispielweise reine Alkane (z. B. Hexan, Heptan, Octan, Isooctan), aromatische Kohlenwasserstoffe (z. B. Benzol, Toluol, Xylol), Ester (z.B. Essigsäureethylester, Essigsäurepropyl-, -butyl- oder -hexylester), halogenierte Kohlenwasserstoffe (z. B. Chlorbenzol), Alkanole (z. B. Methanol, Ethanol, Ethylenglycol, Ethylenglycolmonomethylether), Ketone (z. B. Aceton, Butanon) und Ether (z. B. Diethylether, Dibutylether) oder Gemische davon. Die wässrigen Reaktionssysteme für wässrige Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Colösungsmittel für die vorliegende Erfindung werden bevorzugt gewählt aus der folgenden Gruppe, bestehend aus aliphatischen Alkoholen, Glycolen, Ethern, Glycolethern, Pyrrolidinen, *N*-Alkylpyrrolidinonen, *N*-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen

und dergleichen, sowie Derivaten und Gemischen davon.

Die Polymerisationszeit beträgt üblicherweise - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Die hergestellten Polymere weisen vor der Hetero-Diels-Alder-Reaktion bevorzugt ein gewichtsmittleres Molekulargewicht $M_w$ von 50.000 bis 600.000 g/mol, mehr bevorzugt zwischen 100.000 und 500.000 g/mol auf (die Angabe mittlerer Molekulargewichte $M_w$ und $M_n$ und von Polydispersitäten P bezieht sich auf die Bestimmung mittels Größenausschlusschromatographie [Gelpermeationschromatographie, GPC]; Kalibrierung: PMMA-Standards [Polymethylmethacrylat-Kalibrierung]). Die nach diesem Verfahren hergestellten Acrylathaftklebemassen besitzen, je nach Reaktionsführung, eine Polydispersität P von $M_w/M_n < 4{,}5$. Besonders bevorzugt wird das erfindungsgemäße Verfahren derart durchgeführt, dass die Molekulargewichtsverteilung der Polyacrylate vor der Hetero-Diels-Alder-Reaktion eine Polydispersität von 2 bis 3,5 aufweisen.

Zum Gegenstand der Erfindung zählt weiterhin die Reaktion der aus den RAFT-Reglern stammenden funktionellen Gruppen im Polymerisationsprodukt mit den Bisdienylverbindungen unter Hetero-Diels-Alder-Mechanismen, wobei es zum Molmassenaufbau der Polymere kommt. Im Falle von Bisdienylverbindungen ist die mittlere Kettenlänge der verlängerten Makromoleküle dabei mindestens doppelt so hoch wie die mittlere Kettenlänge der Polymerisationsprodukte, da mindestens zwei Polyacrylatmakromoleküle miteinander verknüpft wurden. Dies führt entsprechend mindestens zur Verdoppelung der mittleren Molmasse.

Überraschend wurde gefunden, dass durch den Einsatz von Bisdienylverbindungen ein effektiver, prozessual leicht zu bewirkender Molmassenaufbau von Polyacrylaten möglich ist es dabei zu keiner signifikanten Verschlechterung der Polydispersität kommt. Besonders geeignet sind $\alpha,\omega$-Bisdienyl-Verbindungen. Die Methode zum Molmassenaufbau über Bisdienylverbindungen ist besonders gut für Prozesse geeignet, in denen die Polyacrylate in der Schmelze verarbeitet werden (sogenannte "Hotmelt"-Prozesse), da aufgrund der thermischen Reversibilität der Reaktion keine erhöhten Schmelzeviskositäten resultieren, jedoch nach Abkühlen der Schmelze die Reaktionspartner erneut miteinander reagieren und somit die mindestens Verdoppelung der Molmasse der Polymere zu Klebemassen mit einer erhöhten Kohäsion führen.

Als positiver Effekt der Hetero-Diels-Alder-Reaktionen wird eine Verfärbung der Polymere, die durch die RAFT-Reagenzien und/oder Neben- und Spaltprodukte, die bei der Herstellung oder Umsetzung der RAFT-Reagenzien auftreten, deutlich minimiert und teilweise komplett entfärbt (die Natur der RAFT-Regler bringt es aufgrund der chromophoren Zentren der funktionellen Gruppen - die insbesondere Schwefelatome, ggf. Sauerstoff oder Stickstoffatome enthaltene konjugierte Doppelbindungen aufweisen - mit sich, dass die erhaltenen Polymere in der Regel relativ stark gelb bis braun verfärbt sind, was für eine Vielzahl von Anwendungen im Klebebandbereich nicht tolerierbar ist). Auch der Geruch der Schwefelverbindungen wird teilweise vermindert, so dass er im Produkt nicht mehr als störend wahrgenommen wird.

Das bzw. die konjugierten Diene können dabei vorteilhaft zu den erhaltenen Polymeren zugesetzt (zugemischt) werden, insbesondere zu einem Zeitpunkt, zu dem die Polymerisation weitgehend oder bereits vollständig abgeschlossen ist. Somit wird vermieden, dass die Regler ihre Wirksamkeit durch Hetero-Diels-Alder-Reaktionen verlieren, solange diese noch für die Polymerisation erforderlich ist.

Das erfindungsgemäße Verfahren zum Molmassenaufbau und somit zur Kohäsionssteigerung der Polymere findet bevorzugt in Lösung oder in der Schmelze statt, kann aber auch in Dispersionen durchgeführt werden. Die Reaktion kann thermisch und/oder photochemisch ablaufen. Bevorzugt wird die Reaktion zum Molmassenaufbau bei Temperaturen bis zu 120 °C durchgeführt, besonders bevorzugt unter milden Bedingungen bis zu 40 °C. Um bei niedrigen Temperaturen vorgehen zu können, ist es teilweise notwendig, eine Lewis-Säure (zum Beispiel $ZnCl_2$) oder eine Brønsted-Säure (Trifluoressigsäure, p-Toluolsulfonsäure) als Katalysator einzusetzen.

Die Retro-Hetero-Diels-Alder-Reaktion findet bevorzugt bei Temperaturen ab 100 °C, besonders bevorzugt ab 120 °C statt, so dass die nach dem erfindungsgemäßen Verfahren hergestellten Polymere (insbesondere Klebemassen, wie Haftklebemassen) auch für Anwendungen bei höheren Temperaturen geeignet sind. Die maximalen Anwendungstemperaturen sollten dabei bevorzugt mindestens 20 °C unterhalb der Temperatur der Retro-Hetero-Diels-Alder-Reaktion liegen, da ansonsten Schwächen hinsichtlich der Kohäsion auftreten können.

Erfindungsgemäß geeignet sind alle Dien-Komponenten, die mit den Doppelbindungen C=X der funktionellen Gruppen S-C=X aus den RAFT-Reagenzien insbesondere in den Polymerketten als Dienophil eine Hetero-Diels-Alder-Reaktion eingehen kann, wie dies nachfolgend schematisch dargestellt ist:

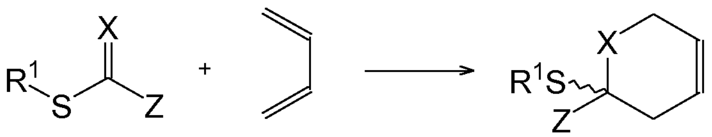

(IX)

Zur Entfärbung tragen auch Diels-Alder-Reaktionen bei, die mit den entsprechenden Gruppen C=X in Nebenprodukten und Regler-Überresten aus der Polymerisation ablaufen.

Die Wirksamkeit der konjugierten Diene bezüglich der aus den Reglern stammenden funktionellen Gruppen kann der Fachmann durch geläufige Überlegungen ohne unzumutbaren Aufwand ermitteln, etwa mittels der Woodward-Hoffmann-Regeln oder über HOMO-LUMO-Betrachtungen, bei cyclischen Dienen auch mittels Betrachtungen zum Abbau der Ringspannung. Diese Theorien sind in vielen Lehrbüchern ausführlich beschrieben und gehören zum Kenntnisstand des Fachmanns.

Sehr bevorzugt werden die Diene derart gewählt, dass sie auch in der Lage sind, Thiole, die häufig als Nebenprodukte auftreten und meist für den Geruch verantwortlich sind oder zumindest zu diesem beitragen, mittels Hydrothiolierung und/oder Thiol-En-Reaktion zu binden.

Die Bisddienylverbindungen weisen mindestens zwei Dienbausteine pro Verbindung auf, die vorteilhaft endständig am Bisdienylgerüst [siehe oben Baustein D im Schema der Formel (II)] vorliegen. Die Dienbausteine [bezeichnet mit Y im obigen Schema (II)] können dabei identisch oder auch unterschiedlich gewählt sein. Mit unterschiedlichen Dienbausteinen lässt sich beispielweise die Geschwindigkeit der Reaktion mit den einzelnen Dienbausteinen einen Bisdienyls variieren, so dass der eine Dienbaustein schneller mit der funktionellen Gruppe des in das Polymer eingebauten RAFT-Reglers [Z im Schema (II)] reagiert als der andere Dienbaustein.

Die Dienbausteine der Bisdienylverbindungen werden vorzugsweise gewählt aus der Liste der acyklischen und cyklischen Verbindungen mit zwei konjugierten Doppelbindungen, so dass diese Verbindungen, im Falle von Bis- oder Multidienylverbindungen jeweils zwei oder mehr dieser Verbindungen, mit dem Dienylgrundgerüst (Y) substituiert vorliegen. Besonders bevorzugt werden elektronenarme acyklische oder cyklische Verbindungen - insbesondere mit zwei zwei oder mehr Dienbausteinen pro Molekül - eingesetzt. Beispiele für die erfindungsgemäßen Dienbausteine sind (entsprechend an das Dienylgrundgerüst (Y) gebundene) 1,3-Butadiene, 1-Methoxy-1,3-butadiene, 2,4-Hexadiene, (2E)-2,4-Pentandiensäure und deren Ester, Sorbinsäure und deren Ester, 2,4-Hexadien-1,6-dicarbonsäure und deren Ester, 1,3-Cyclohexadiene, 1-Methoxy-1,3-cyclohexadiene, Anthracen, substituierte und unsubstituierte Furane, substituierte und unsubstituierte Thiophene. Besonders bevorzugt sind substituierte und unsubstituierte Cyclopentadiene, (E)-1-Methoxy-3-trimethylsilyloxy-1,3-butadien (Danishefsky-Dien), 1-(Trimethylsiloxy)-1,3-butadiene, 1-(Triethylsiloxy)-1,3-butadiene und (1*E*,3*Z*)-1-Methoxy-2-methyl-3-(trimethylsilyloxy)-1,3-pentadiene als Dienbausteine, insbesondere als endständige Dienfunktionalitäten.

In einer Weiterentwicklung des erfindungsgemäßen Verfahrens werden Dienfunktionalitäten genutzt, die erst in situ erzeugt werden, wie beispielweise o-Chinodimethan, welches unter anderem mittels Metallkatalysatoren aus 1,2-Bis(chlormethyl)benzol oder 1,2-Bis(brommethyl)benzol sowie photochemisch mittels UV-Licht aus (2,5-Dimethylphenyl)(phenyl)methanon-Derivaten hergestellt werden kann.

Bevorzugt werden solche konjugierten Diene verwendet (zugemischt und/oder in situ erzeugt), bei denen die konjugierten Doppelbindungen in den Dien-Bausteinen nicht durch Heteroatome substituiert sind.

Im erfindungsgemäßen Sinne als sehr bevorzugt herausgestellt hat sich die Kombination eines Dithioesters als RAFT-Reagenz, insbesondere ein Dithioester nach einer der vorstehenden Formeln (VI) und/oder (VII), und eine mit zwei Cyclopentadien-Bausteinen modifizierte Verbindung als Bisdienylverbindung, insbesondere als $\alpha,\omega$-Bisdienylverbindung.

Durch die geeignete Wahl der RAFT-Regler und der di- oder mehrfachfunktionellen Dienylverbindungen kann das Gleichgewicht der Hetero-Diels-Alder-Reaktion so verschoben werden, dass eine Verarbeitung in der Schmelze möglich ist und die aus den Polymeren hergestellten Produkte, insbesondere Klebeprodukte, besonders Haftklebeprodukte, dennoch eine ausreichende Kohäsion auch bei erhöhten Temperaturen aufweisen.

Mittels der Kettenverlängerungsreaktion lässt sich zudem ein weiteres Problem der kontrollierten RAFT-Polymerisation ausräumen. Die Natur der RAFT-Regler bringt es aufgrund der chromophoren Zentren der funktionellen Gruppen (die Schwefelatome enthaltende konjugierte Doppelbindungen aufweisen) mit sich, dass die Polymere in der Regel relativ stark gelb bis braun verfärbt sind, was für eine Vielzahl von Anwendungen insbesondere im Klebebandbereich nicht tolerierbar ist. Zudem können herstellungsbedingte Schwefelfragmente in den Polymeren, Nebenprodukte und Regler-Überreste einen sehr unangenehmen Geruch aufweisen und sind üblicherweise ihrerseits farbig. Durch die Reaktion der chromophoren Zentren in der Hetero-Diels-Alder-Reaktion wird die Verfärbung der Polymere, bedingt durch die RAFT-Reagenzien bzw. Neben- und Spaltprodukte, die bei der Herstellung oder Umsetzung der RAFT-Reagenzien auftreten, deutlich minimiert und teilweise komplett entfernt, ohne dabei die Klebeigenschaften der Masse wesentlich zu verändern. Auch der Geruch der Schwefelverbindungen wird dabei teilweise gemindert, sodass er im Produkt nicht mehr als störend oder gar nicht mehr wahrgenommen wird.

Gegenstand der Erfindung sind weiterhin die durch das erfindungsgemäße Verfahren erhaltenen Haftklebemassen.

Durch die Hetero-Diels-Alder-reaktionen weisen die erhaltenen Polymere in den Haftklebemassen Cyclo-1-X-hex-3-en-Bausteine in den Polymerketten auf, wobei der Hex-3-en-Teilbaustein gegebenenfalls auch durch Heteroatome substituiert sein kann (je nach eingesetzten konjugierten Dienen). Weiter sind Gegenstand der Erfindung daher Haftklebemassen umfassend Polymere auf Acrylatbasis, die Cyclo-1-X-hex-3-en-Bausteine mit X = S, O oder N in den Polymerketten enthalten, insbesondere Haftklebemassen enthaltend Polymere dieser Art erhältlich durch das erfindungsgemäße Verfahren. Die Mehrzahl dieser Polymere wird dabei einen, zwei oder mehr solcher Cyclo-1-X-hex-3-en-Bausteine pro Polymerkette aufweisen, je nach eingesetzten Bis- bzw. Multidienylverbindungen.

Wie bereits angedeutet, können die erfindungsgemäß erhältlichen Polymere - je nach bereits vorhandenen klebenden oder selbstklebenden Eigenschaften - sehr gut als Haftklebemassen, eingesetzt oder zu solchen weiterverarbeitet werden, da ihre Polymerstruktur und die Polydispersität sehr gut steuerbar sind und damit die klebtechnischen Eigenschaften auf den beabsichtigten Verwendungszweck abgestimmt sein können. Durch die Kettenverlängerung ist zum einen eine hervorragende Verarbeitung aus der Schmelze möglich, zum anderen kann die Kohäsion der fertigen Produkte auch bereits ohne nachfolgende Vernetzungsreaktionen vorteilhaft erhöht werden. Anschließende Vernetzungsreaktionen können diesen Effekt noch verstärken. Da durch die erfindungsgemäße Entfärbungsreaktion die Zusammensetzung des Polymers sich nur unwesentlich ändern, werden die Eigenschaften der Klebemasse nicht beeinflusst.

Insbesondere für die Verwendung als Haftklebemassen können der Basispolymerkomponente (bzw. der schon teilabgemischten Haftklebemasse) übliche, zur Erzielung und/oder Verbesserung der haftklebrigen Eigenschaften zweckdienliche Zusätze oder zur Erzielung und/oder Verbesserung anderer Eigenschaften zweckdienliche Additive zugemischt werden.

So können insbesondere Harze beigemischt werden, insbesondere klebrigmachende Harze. Als klebrigmachende Harze sind beispielweise die bekannten und in der Literatur beschriebenen Klebharze einsetzbar. Im allgemeinen lassen sich alle mit der entsprechenden Klebemasse kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Beispielhaft genannt seien die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Kombinationen dieser und weiterer Harze können gezielt eingesetzt werden, um die Eigenschaften der resultierenden Klebemasse wunschgemäß einzustellen.

Weiterhin können optional Weichmacher (Plastifizierungsmittel), Füllstoffe (z. B. Fasern, Russ, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z.B. in Form von primären und sekundären Antioxidantien oder in Form von Lichtschutzmitteln zugesetzt werden.

Es können verträgliche Vernetzersubstanzen zugesetzt werden, um eine Vernetzung zu erzeugen. Als Vernetzer eignen sich z. B. Metallchelate, multifunktionelle Isocyanate, multifunktionelle Epoxide, multifunktionelle Aziridine, multifunktionelle Oxazoline oder multifunktionelle Carbodiimide. Auch multifunktionelle Acrylate lassen sich vorteilhaft als Vernetzer für eine actinische Bestrahlung verwenden.

Bei der Verwendung der erfindungsgemäß erhältlichen Polymere als Haftklebemassen bietet es sich an, diese ein- oder doppelseitig auf einen Träger aufgetragen als Klebeband anzubieten. Die Klebebänder können weitere Schichten aufweisen, wie etwa weitere Trägerschichten, Funktionsschichten oder dergleichen.

Für die Verankerung der Haftklebemasse auf dem Träger oder auf einem anderen Substrat kann es von Vorteil sein, wenn die Masse und/oder das Substrat vor der Beschichtung mit Corona oder Plasma behandelt wird. Für die atmosphärische Plasmabehandlung eignen sich z. B. Geräte der Fa. Plasmatreat.

Weiterhin kann es für den Prozess und für die Verankerung der Haftklebemassenschicht mit weiteren möglichen Schichten, wie beispielweise Trägern, zum Beispiel einer Folie auf Basis von Polyester, Polyamid, Polymethacrylat, PVC, etc. oder einem viskoelastischen geschäumten oder ungeschäumten Träger auf Basis von Polyacrylat oder Polyurethan von Vorteil sein, wenn eine chemische Verankerung z. B. über einen Primer stattfindet.

Die innere Festigkeit (Kohäsion) der Haftklebemasse kann durch eine Vernetzung noch weiter gesteigert werden. Besonders bevorzugt für die Verwendung als Haftklebemasse werden solche Polyacrylat-basierenden Massen eingesetzt, die koordinativ oder kovalent vernetzbar sind, um zu gewährleisten, dass die Klebemasse ein konstantes Eigenschaftsprofil besitzt. Für derartige Vernetzungen ist die vorherige Beigabe geeigneter Vernetzer vorteilhaft, insbesondere wie sie weiter oben aufgeführt sind.

Das einseitige oder doppelseitige Klebeband ist für Transport, Lagerung oder Stanzung vorzugsweise mindestens einseitig mit einem Liner versehen, also zum Beispiel einer silikonbeschichteten Folie oder einem Silikonpapier.

Eine weitere vorteilhafte Ausführung der Erfindung ist die Verwendung einer Schicht einer trägerfreien Haftklebemasse als selbstklebendes Haftklebeband, also als sogenanntes Transferklebeband. Als trägerfreie Klebemasse wird eine Klebemasse bezeichnet, die keinen dauerhaften Träger, aufweist. Vielmehr ist die selbstklebende Masse in bevorzugter Ausgestaltung lediglich auf einen temporären Träger, also ein Material, das lediglich vorübergehend zur Stützung und leichteren Auftragbarkeit der selbstklebenden Masse dient, aufgebracht. Solche temporären Träger werden auch als Liner bezeichnet und können vorteilhaft eine Releasewirkung aufweisen, etwa durch geeignete Oberflächenbeschichtungen. Für die Verwendung der Haftklebemassenschicht zur Verklebung auf einer Substratoberfläche wird

der Liner dann entfernt, und der Liner stellt somit kein produktives Bauteil dar.

Die Herstellung einer solchen erfindungsgemäßen Polymerschicht kann aus Lösung sowie aus der Schmelze erfolgen. Für den letzteren Fall umfassen geeignete Herstellprozesse sowohl Batchverfahren als auch kontinuierliche Verfahren. Besonders bevorzugt ist die kontinuierliche Fertigung mit Hilfe eines Extruders und anschließender Beschichtung direkt auf einem Liner mit oder ohne Klebemasseschicht.

Die erfindungsgemäße Polymerschicht kann in unterschiedlichen Schichtdicken hergestellt werden, insbesondere auch mit einer Schichtdicke von mindestens 25 µm, vorzugsweise von mindestens 100 µm, weiter vorzugsweise von mindestens 200 µm.

Im Folgenden wird die Erfindung anhand einiger Beispiele näher erläutert, ohne die Erfindung damit zu beschränken.

## Beispiele

### Testmethoden

Folgende Testmethoden wurden angewendet, um die klebtechnischen als auch generelle Eigenschaften der hergestellten Haftklebemassen zu evaluieren.

### ESI-MS-Messungen (Test A)

Massenspektren wurden an einem LXQ Massenspektrometer (ThermoFisher Scientific, San Jose, CA, USA) aufgenommen, ausgestattet mit einer Atmosphärendruck Ionisierungsquelle im Luftzerstäuber-unterstützten Elektronenspray Modus. Das Instrument wurde in einem m/z-Bereich von 195 - 1822 mit einem Standard, welcher Koffein, Met-Arg-Phe-Ala-Acetat (MRFA), und einer Mischung aus fluorinierten Phosphazenen (Ultramark 1621) (alle von Sigma-Aldrich), kalibriert. Eine konstante Spray-Spannung von 3.5 kV und ein dimensionsloses Hüllgas von 8 sowie eine Flussrate des Trägergases von 2 wurden eingestellt. Die Kapillarspannung, die Linsenspannung und die Kapillartemperatur betrug 60 V, 120 V und 275°C.

### Gelpermeationschromatographie GPC (Test B)

Die Bestimmung der mittleren Molekulargewichte $M_n$ und $M_w$ und der Polydisperistät P erfolgte über die Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 µ (5 µm), 103 Å. ID 8,0 mm x 50 mm verwendet. Zur Auftrennung wurden die Säulen PSS-SDV, 5 µ (5 µm), 103 Å (0,0103 µm) sowie 105 Å (0,0105 µm) und 106 Å (0,0106 µm) mit jeweils ID 8,0 mm x 300 mm eingesetzt. Die Probenkonzentration betrug 4 g/L, die Durchflussmenge 1,0 mL pro Minute. Es wurde gegen PMMA-Standards gemessen.

### NMR-Messungen (Test C)

Die Strukturen der synthetisierten Verbuindungen wurden mittels $^1$H-NMR und $^{13}$C-NMR-Spektroskopie verifiziert (Bruker AM 400 MHz Spektrometer für Wasserstoffkerne und 100 MHz für Kohlenstoffkerne). Alle Proben wurden in $CDCl_3$ gelöst. Die $\delta$-Skala ist gegen Tetramethylsilan ($\delta$ = 0.00) als internen Standard gemessen.

### 180° Klebkrafttest (Test D)

Ein 20 mm breiter Streifen einer auf Polyester als Schicht aufgetragenen Acrylathaftklebemasse wurde auf Stahlplatten oder PE-Platten aufgebracht. Der Haftklebestreifen wurde zweimal mit einem 2 kg-Gewicht auf das Substrat aufgedrückt. Das Klebeband wurde anschließend sofort mit 300 mm/min und im 180° Winkel vom Substrat abgezogen. Die Stahlplatten wurden zweimal mit Aceton und einmal mit Isopropanol gewaschen. Die Messergebnisse sind in N/cm angegeben und sind gemittelt aus drei Messungen. Alle Messungen wurden bei Raumtemperatur durchgeführt.

### Scherfestigkeit (Test E)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm · 13 mm (länge · Breite). Anschließend wurde mit 2 kg Anpressdruck das Klebeband viermal auf den Stahlträger gedrückt. Bei Raumtemperatur wurde ein 1 kg-Gewicht an dem Klebeband befestigt. Die gemessenen Scherstandzeiten sind in Minuten angegeben und entsprechen dem Mittelwert aus drei Messungen.

Herstellung der Untersuchungsmuster und experimentelle Untersuchung Herstellung von Bis-2,2'-phenylethyl-thiocarbonat

Die Synthese des Bis-2,2'-phenylethyl-thiocarbonates erfolgt ausgehend von 2-Phenylethylbromid mit Dischwefelkohlenstoff und Natriumhydroxid nach einer Vorschrift von Synth. Communications 1988, 18, 1531-1536. Ausbeute nach Destillation: 72 %.

Charakterisierung: **$^1$H-NMR** (400 MHz, $CDCl_3$, δ/ppm): 7,20-7,40 (m, 10 H), 1,53, 1,59 (2 x d, 6 H), 3,71, 3,81 (2 x m, 2 H).

Die folgenden Synthesen zur Darstellung Dien-terminierter Systeme wurden in Analogie den Vorschriften aus J. Pol Sci.: PartA: Pol. Chem. 2009, 47, 6053 durchgeführt.

Herstellung von Hexadien-1-ol-Derivaten 1a

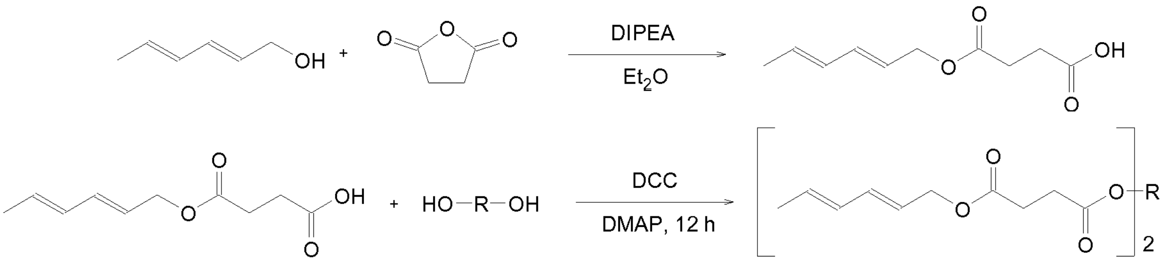


R = $-CH_2CH_2-$ 1a

Eine Mischung aus *trans,trans*-2,4-Hexadien-1-ol (2.55 g, 26 mmol), Bernsteinsäureanhydrid (3.0 g, 30 mmol) und DIPEA (Di-isopropylethylamin, 3.4 g, 26 mmol) in Diethylether (10 mL) wurde für zwei Tage bei Raumtemperatur gerührt. Das Lösungsmittel wurde im Vakuum entfernt, der Rest in Dichlormethan erneut gelöst und mit einer 5%-igen wässrigen Citronensäurelösung gewaschen. Die organische Phase wurde über $MgSO_4$ getrocknet. Anschließend wurden Ethylenglykol (7,45 g, 0,12 mol), 4-Dimethylaminopyridin (1,91 g, 15,6 mmol) und zusätzliche 50 mL Dichlormethan zugegeben und mit einem Eisbad gekühlt. *N,N*-Dicyclohexylcarbodiimid (DCC, 24,76 g, 0,12 mol) gelöst in 320 mL Dichlormethan wurden tropfenweise hinzugegeben und die resultierende Lösung für 12 h bei Raumtemperatur gerührt. Die Lösung wurde filtriert und anschließend wurde das Lösungsmittel des Filtrats im Vakuum entfernt. Das Produkt konnte ohne weitere Aufarbeitung eingesetzt werden.

Charakterisierung: **$^1$H-NMR** (400 MHz, $CDCl_3$, δ/ppm): 6,21 (dd, -CH=CH-), 6.01 (ddq, =CH-CH=), 5.71 (dq,-CH=CH-), 5.58 (dt, -CH=CH), 4.58 (d, $-CH_2-O$), 4.23 (t, $-O-CH_2-$), 2.64 (t, $-CH_2-CH_2$), 1.75 (d, $CH_3-CH=$). $M_n$ (ESI-MS) = 414 g/mol.

Herstellung von Cyclopentadienyl-terminierter Verbindungen 2a-e

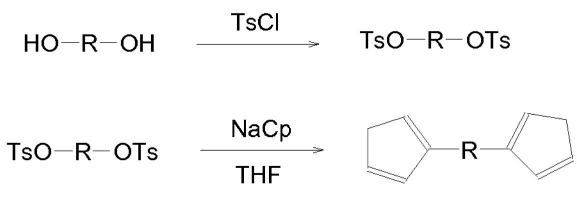


| | |
|---|---|
| R = $-CH_2CH_2-$ | 2a |
| Poly(ethylenoxid) | 2b |
| Polybutadien | 2c |
| Poly(ethylenoxid) (4-Arm) | 2d |
| Poly(ethylenoxid) (6-Arm) | 2e |

NaOH (1.4 g) wurde in 7.5 mL $H_2O$ gelöst. Eine Lösung des Diols (2.5 mmol) in 6.2 mL THF wurde langsam hinzugegeben. Die resultierende Mischung wurde mit einem Eisbad gekühlt und anschließend wurde eine Lösung aus p-Toluolsulfonylchlorid (TsCl, 4.3 g, 2.2 mmol) in 6.2 mL THF zugetropft. Die Mischung wurde über Nacht bei Raumtemperatur gerührt und anschließend mit Dichlormethan extrahiert. Die organische Phase wurde dreimal mit Wasser gewaschen und über $MgSO_4$ getrocknet, filtriert und aufkonzentriert. Das Produkt wurde mit kaltem Diethylether ausgefällt. Das tosylierte Diol wurde in 30 mL absolutem THF erneut gelöst und in einem Eis-Salzbad auf 0°C gekühlt. Anschließend wurden zu der Lösung langsam 6 Äquivalente einer Cyclopentadienylnatrium-Lösung (2,0 M in THF) getropft. Die Mischung wurde über Nacht bei Raumtemperatur gerührt und anschließend der entstandene Niederschlag

abfiltriert. Der Niederschlag wurde mit THF gewaschen und das Filtrat im Vakuum aufkonzentriert. Mittels kaltem Diethylether wurde das jeweilige Produkt ausgefällt.

Als Diole wurden eingesetzt: a) Ethylenglykol, b) Poly(ethylenoxid) (Cas No. 25322-68-3, $M_n$ = 4000 g/mol, Sigma-Aldrich), c) Polybutadien bis-hydroxy-terminiert (CAS No. 69102-90-5, Sigma-Aldrich), d) Poly(ethylenoxid), 4-Arm, hydroxy-terminiert ($M_n$ = 10000 g/mol, Sigma-Aldrich, Katalognummer: 565709), e) Poly(ethylenoxid), 6-Arm, hydroxy-terminiert ($M_n$ = 17000 g/mol, Sigma-Aldrich, Katalognummer: 570273).

Charakterisierung:

**2a:** **$^1$H-NMR** (400 MHz, $CDCl_3$, δ/ppm): 6.47-6.08 (m, $C_5H_5$, vinylisch), 2.95 (m, $-O-CH_2-CH_2-$), 2.71 (m, Ring-$CH_2$-). $M_n$ (ESI-MS) = 190 g/mol.

**2b:** **$^1$H-NMR** (400 MHz, $CDCl_3$, δ/ppm): 6.47-6.08 (m, $C_5H_5$, vinylisch), 2.95-2.65 (m, $-O-CH_2-CH_2-$), 2.71 (m, Ring-$CH_2$-). $M_n$ (GPC) = 4150 g/mol.

**2c:** **$^1$H-NMR** (400 MHz, $CDCl_3$, δ/ppm): 6.47-6.08 (m, $C_5H_5$, vinylisch Cyclopentadien), 5.75-4.90 (m, vinylisch Polybutadien), 2.95-2.65 (m, $-O-CH_2-CH_2-$), 2.71 (m, Ring-$CH_2$-), 2.15-2.03 (m, Polybutadien), 1.43-1.20 (Polybutadien). $M_n$ (GPC) = 2950 g/mol.

**2d:** **$^1$H-NMR** (400 MHz, $CDCl_3$, δ/ppm): 6.47-6.08 (m, $C_5H_5$, vinylisch), 2.95-2.65 (m, $-O-CH_2-CH_2-$), 2.71 (m, Ring-$CH_2$-). $M_n$ (GPC) = 10150 g/mol.

**2e:** **$^1$H-NMR** (400 MHz, $CDCl_3$, δ/ppm): 6.47-6.08 (m, $C_5H_5$, vinylisch), 2.95-2.65 (m, $-O-CH_2-CH_2-$), 2.71 (m, Ring-$CH_2$-). $M_n$ (GPC) = 17150 g/mol.

Polymerisation Haftklebemasse PSA 1

Ein für radikalische Polymerisationen konventioneller Reaktor wurde mit 32 g n-Butylacrylat, 442 g 2-Ethylhexylacrylat, 4,5 g Acrylsäure, 1,40 g 4-(Benzothioylsulfanyl)-4-cyanopentansäure (5,00 mmol, Sigma-Aldrich, CAS No. 201611-92-9) und 0,12 g Vazo 67® (Fa. DuPont) befüllt. Nach 20 Minuten Durchleiten von Argon und zweimaligen Entgasen wurde der Reaktor unter Rühren auf 70 °C hochgeheizt für 16 h polymerisiert und im Anschluss wurde auf Raumtemperatur abgekühlt. GPC-Analyse: ($M_n$ = 104000 g/mol, $M_w/M_n$ = 2,09)

Herstellung der Haftklebemassen PSA 2 bis PSA 7 mittels Hetero-Diels-Alder-Reaktion

Zu der Polymerlösung aus der Polymerisationsvorschrift für die Haftklebemasse PSA 1 wurde eine Lösung der Bis-dienyl-terminierten Verbindungen 1a sowie 2a bis 2e bei Raumtemperatur gegeben und für zwei Stunden gerührt. Die Reaktionsmischung mit der Bis-hexadienyl-terminierten Verbindung wurde für 16 h bei 70°C gerührt und es wurden zusätzlich 0,3 Gew.-% bezogen auf den Feststoffgehalt $ZnCl_2$ als Katalysator hinzugegeben. Die Mengen wurden jeweils unter der Annahme, dass alle Reaktionen quantitativ verlaufen sind so gewählt, dass ein Äquivalent der Bis-dienyl-Komponente und zwei Äquivalente des Dithioesters (ausgehend von der jeweils am Anfang der RAFT-Polymerisation eingesetzten Menge) miteinander gemischt werden.

Tabelle 1: Umsetzung des Dithioesters mit der Bis-dienyl-Komponente

| Haftklebemasse | Dithioester | Bis-dien | $M_n$ [g/mol] | $M_w/M_n$ |
|---|---|---|---|---|
| **PSA 2** | PSA 1 | 1a | 110000 | 3,20 |
| **PSA 3** | PSA 1 | 2a | 190000 | 2,21 |
| **PSA 4** | PSA 1 | 2b | 201000 | 2,36 |
| **PSA 5** | PSA 1 | 2c | 145000 | 2,89 |
| **PSA 6** | PSA 1 | 2d | 320000 | 3,86 |
| **PSA 7** | PSA 1 | 2e | 509000 | 4,45 |

Anhand der hohen Polydispersität ist in Tabelle 1 zu erkennen, dass trotz der Zugabe eines Katalysators und erhöhter Temperaturen, die Umsetzung mit der Hexadienyl-terminierten Verbindung 1a nur im geringen Maße stattfand. Die Cyclopentadienylterminierten Verbindungen hingegen sind deutlich reaktiver, wobei die Art des Diols die Reaktion scheinbar beeinflussen kann (siehe Reaktion mit Poly(ethylenoxid) 2b und Polybutadien-Derivat 2c). Durch die Verwendung von mehrfachfunktionellen Molekülen 2d und 2e lassen sich die Molmassen deutlich erhöhen, jedoch ist anhand der deutlich erhöhten Polydispersität zu erkennen, dass die Reaktion nicht vollständig abläuft.

Herstellung der Muster zur Auswertung der Klebeigenschaften

Die jeweiligen Lösungen der Haftklebemassen PSA 1 bis PSA 7 wurden mit Aceton auf 50 % verdünnt, 0,2 Gew.-% bezogen auf das Polymer Aluminiumacetylacetonat (Aldrich, CAS No. 13963-57-0) zugegeben und anschließend über ein konventionelles Rakel auf einem 23 μm dicken PET-Träger beschichtet und dann für 15 Minuten bei 120 °C getrocknet. Der Masseauftrag betrug 50 g/m$^2$. Das Polymer weist eine rötliche Färbung auf. Anschließend wurde nach Testmethoden D und E ausgetestet.

Tabelle 2: Klebdaten

| Beispiel | Klebkraft Stahl [N/cm] | Klebkraft PE [N/cm] | Scherstandszeiten [Min] |
|---|---|---|---|
| PSA 1 | 4,5 | 2,5 | 5400 (A) |
| PSA 2 | 4,5 | 2,4 | 5200 (A) |
| PSA 3 | 4,3 | 2,4 | > 10000 (A) |
| PSA 4 | 4,5 | 2,6 | > 10000 (A) |
| PSA 5 | 4,5 | 2,6 | 5600 (A) |
| PSA 6 | 5,3 | 2,7 | 7800 (A) |
| PSA 7 | 5,5 | 3,1 | 2400 (K) |

Die Beispiele belegten, dass durch den Aufbau der Molmasse mittels Hetero-Diels-Alder-Reaktion die Scherstandszeiten erhöht werden können, wobei im Gegensatz die gleichzeitige Abnahme der Adhäsion wie im Falle der Kohäsionserhöhung durch die Verwendung von Vernetzern nicht beobachtet werden konnte. Weiterhin zeigt sich, dass die sternförmigen Polymere eine erhöhte Adhäsion aufgrund der größeren Anzahl der freien Kettenenden aufweist und dass im Falle des sechsarmigen Sterns die Kohäsion wieder sinkt (Kohäsions- statt Adhäsionsbruch). Dies geht einher mit der starken Knäuelungsneigung mehrarmiger Sternpolymer und der daraus resultierenden stärkeren Abschirmung der Acrylsäuregruppen, die dann teilweise für den Vernetzer nicht mehr zugänglich sind.

**Patentansprüche**

**1.** Verfahren zur Herstellung von Haftklebemassen auf Acrylatbasis, in dem Polymere auf Acrylatbasis hergestellt werden,
wobei zunächst eine kontrollierte radikalische Polymerisationsreaktion einer Reaktionsvorlage umfassend zumindest ein Monomer auf Acrylatbasis in Anwesenheit zumindest einer Reglersubstanz mit zumindest einer funktionellen Gruppe S-C=X durchgeführt wird, wobei X = S, O oder N, wobei die Reglersubstanz aus der Gruppe umfassend Dithioester, Dithiocarbonate, Dithiocarbamate, Trithiocarbonate, Imido-Dithio-Carbonate und Xanthate ("RAFT-Regler") gewählt ist,
wobei die Reglersubstanz-Moleküle so in die entstehenden Polymerketten eingebaut werden, dass die jeweiligen Polymerketten zumindest eine funktionelle Gruppe des eingebauten Reglers aufweisen,
**dadurch gekennzeichnet, dass**
zumindest eine chemische Verbindung ("Bisdienyl-Verbindung") umfassend zumindest zwei Bausteine ("Dien-Bausteine"), die jeweils zwei konjugierte Doppelbindungen aufweisen, in Kontakt mit den derart erhaltenen Polymeren gebracht wird,
so dass zwischen den konjugierten Doppelbindungen der beiden Dien-Bausteine eines Bisdienyl-Moleküls und jeweils einer Doppelbindung C=X der funktionellen Gruppe S-C=X jeweils einer Polymerkette Hetero-Diels-Alder-Reaktionen bewirkt werden, so dass zumindest zwei Polymerketten mittels des Bisdienyl-Moleküls verknüpft werden, und wobei die erhaltenen Polymere auf Acrylatbasis als Haftklebemassen verwendet werden oder zu Haftklebemassen weiterverarbeitet werden.

**2.** Verfahren nach Anspruch 1, **dadurch gekennzeichnet, dass**
zwei der Dien-Bausteine der Bisdienyl-Verbindung endständig sind (so dass es sich bei der Bisdienyl-Verbindung um eine $\alpha,\omega$-Bisdienyl-Verbindung handelt).

**3.** Verfahren nach einem der vorangehenden Ansprüche, **dadurch gekennzeichnet, dass**
zumindest eine solche chemische Verbindung zu den erhaltenen Polymeren gegeben wird, aus der in situ eine

solche chemische Verbindung, die zumindest zwei konjugierte Doppelbindungen aufweist (also konjugierte Diene), erzeugt werden kann.

4. Verfahren nach einem der vorangehenden Ansprüche, **dadurch gekennzeichnet, dass** die Verbindungen aufweisend die konjugierten Doppelbindungen in dem Baustein C=C-C=C nicht heterosubstituiert sind.

5. Verfahren nach einem der Ansprüche 1 bis 3, **dadurch gekennzeichnet, dass** die Dien-Bausteine der Bisdienyl-Verbindungen unabhängig voneinander aus der folgenden Liste gewählt sind, umfassend 1,3-Butadiene, 1-Methoxy-1,3-butadiene, 2,4-Hexadiene, (2*E*)-2,4-Pentandiensäure, Sorbinsäure und deren Ester, 2,4-Hexadien-1,6-dicarbonsäure und deren Ester, 1,3-Cyclohexadiene, 1-Methoxy-1,3-cyclohexadiene, Anthracen, substituierte und unsubstituierte Furane, substituierte und unsubstituierte Thiophene, substituierte und unsubstituierte Cyclopentadiene, (*E*)-1-Methoxy-3-trimethylsilyloxy-1,3-butadien, 1-(Trimethylsiloxy)-1,3-butadien, 1-(Triethylsiloxy)-1,3-butadien, (1*E*,3Z)-1-Methoxy-2-methyl-3-(trimethylsilyloxy)-1,3-pentadien.

6. Verfahren nach einem der vorangehenden Ansprüche, **dadurch gekennzeichnet, dass**
als Reglersubstanz ein Dithioester mit einem oder mehreren Heteroaromat-Substituenten und/oder mit einem oder mehreren Phosphonatsubstituenten im Säurerest eingesetzt werden, insbesondere eine der Verbindungen

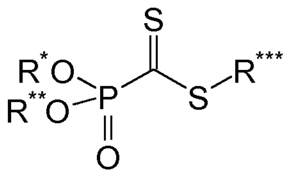

und/oder

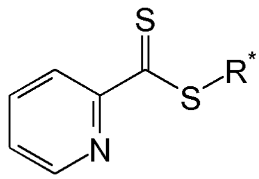

7. Haftklebemassen umfassend Polymere auf Acrylatbasis, **gekennzeichnet durch** jeweils mindestens einem Cyclo-1-X-hex-3-en-Baustein in den Polymerketten, mit X = S, O und/oder N.

8. Haftklebemassen nach Anspruch 7, **gekennzeichnet durch** jeweils mindestens zwei Cyclo-1-X-hex-3-en-Bausteine in den Polymerketten, mit X = S, O und/oder N.

## Claims

1. Method for producing acrylate-based pressure sensitive adhesives, in which acrylate-based polymers are produced, wherein first a controlled radical polymerization reaction of an initial reaction charge comprising at least one acrylate-based monomer is carried out in the presence of at least one chain transfer agent (CTA) having at least one functional group S-C=X, where X = S, 0 or N, the CTA being selected from the group encompassing dithioesters, dithiocarbonates, dithiocarbamates, trithiocarbonates, imidodithiocarbonates, and xanthates ("RAFT CTAs"),
the CTA molecules being incorporated into the polymer chains that form in such a way that the polymer chains in question have at least one functional group of the incorporated CTA, **characterized in that**
at least one chemical compound ("bisdienyl compound") comprising at least two units ("diene units") which each have two conjugated double bonds is contacted with the polymers thus obtained,
so that hetero-Diels-Alder reactions are brought about between the conjugated double bonds of the two diene units of a bisdienyl molecule and in each case one double bond C=X of the functional group S-C=X of in each case one polymer chain, so that at least two polymer chains are linked by means of the bisdienyl molecule,
and wherein the acrylate-based polymers obtained are used as pressure sensitive adhesives or further-processed to pressure sensitive adhesives.

2. Method according to Claim 1, **characterized in that** two of the diene units of the bisdisdienyl compound are terminal (so that the bisdienyl compound is an $\alpha,\omega$-bisdienyl compound).

3. Method according to either of the preceding claims, **characterized in that**
the polymers obtained are admixed with at least one chemical compound from which it is possible in situ to generate a chemical compound which has at least two conjugated double bonds (i.e., conjugated dienes).

4. Method according to any of the preceding claims, **characterized in that** the compounds having the conjugated double bonds in the unit C=C-C=C are not heterosubstituted.

5. Method according to any of Claims 1 to 3, **characterized in that** the diene units of the bisdienyl compounds are selected independently of one another from the following list, encompassing 1,3-butadienes, 1-methoxy-l,3-butadienes, 2,4-hexadienes, (2*E*)-2,4-pentanedienoic acid, sorbic acid and its esters, 2,4-hexadiene-l,6-dicarboxylic acid and its esters, 1,3-cyclohexadienes, 1-methoxy-1,3-cyclohexadienes, anthracene, substituted and unsubstituted furans, substituted and unsubstituted thiophenes, substituted and unsubstituted cyclopentadienes, (*E*)-1-methoxy-3-trimethylsilyloxy-1,3-butadiene, 1-(trimethylsiloxy)-1,3-butadiene, 1-(triethylsiloxy)-1,3-butadiene, (1*E*,3*Z*)-1-methoxy-2-methyl-3-(trimethylsilyloxy)-1,3-pentadiene.

6. Method according to any of the preceding claims, **characterized in that** the chain transfer agent (CTA) used is a dithioester having one or more heteroaromatic substituents and/or having one or more phosphonate substituents in the acid radical, more particularly one of the compounds

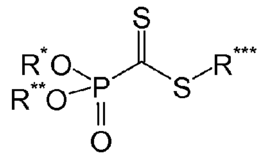

and/or

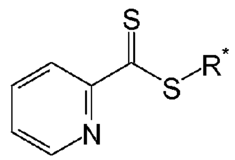

.

7. Pressure sensitive adhesives comprising acrylate-based polymers, **characterized by** in each case at least one cyclo-1-X-hex-3-ene unit in the polymer chains, with X = S, 0 and/or N.

8. Pressure sensitive adhesives according to Claim 7, **characterized by** in each case at least two cyclo-1-X-hex-3-ene units in the polymer chains, with X = S, 0 and/or N.

**Revendications**

1. Procédé de fabrication de matériaux adhésifs de contact à base d'acrylate, selon lequel des polymères à base d'acrylate sont fabriqués, une réaction de polymérisation radicalaire contrôlée d'une préparation de réaction comprenant au moins un monomère à base d'acrylate étant tout d'abord réalisée en présence d'au moins une substance régulatrice contenant au moins un groupe fonctionnel S-C=X, avec X = S, 0 ou N, la substance régulatrice étant choisie dans le groupe comprenant les dithioesters, les dithiocarbonates, les dithiocarbamates, les trithiocarbamates, les imido-dithio-carbonates et les xanthates (« régulateurs RAFT »),
la molécule de la substance régulatrice étant incorporée dans les chaînes polymères formées de sorte que les chaînes polymères comprennent chacune au moins un groupe fonctionnel du régulateur incorporé,
**caractérisé en ce que**
au moins un composé chimique (« composé de bisdiényle ») qui comprend au moins deux composants (« composants diéniques »), qui comprennent chacun deux doubles liaisons conjuguées, est mis en contact avec les polymères ainsi obtenus,
de manière à provoquer des réactions d'hétéro-Diels-Alder entre les doubles liaisons conjuguées des deux composants diéniques d'une molécule de bisdiényle et à chaque fois une double liaison C=X du groupe fonctionnel S-C=X d'une chaîne polymère, de manière à relier au moins deux chaînes polymères au moyen de la molécule de bisdiényle, et les polymères à base d'acrylate obtenus étant utilisés en tant que matériaux adhésifs de contact ou transformés en matériaux adhésifs de contact.

2. Procédé selon la revendication 1, **caractérisé en ce que** deux des composants diéniques du composé de bisdiényle sont terminaux (de sorte que le composé de bisdiényle soit un composé d'$\alpha,\omega$-bisdiényle).

3. Procédé selon l'une quelconque des revendications précédentes, **caractérisé en ce qu'**au moins un composé chimique à partir duquel un composé chimique qui comprend au moins deux doubles liaisons conjuguées (c'est-à-dire un diène conjugué) peut être généré in situ est ajouté aux polymères obtenus.

4. Procédé selon l'une quelconque des revendications précédentes, **caractérisé en ce que** les composés comprenant les doubles liaisons conjuguées ne sont pas hétérosubstitués dans le composant C=C-C=C.

5. Procédé selon l'une quelconque des revendications 1 à 3, **caractérisé en ce que** les composants diéniques des composés de bisdiényle sont choisis indépendamment les uns des autres dans la liste suivante, comprenant :

le 1,3-butadiène, le 1-méthoxy-1,3-butadiène, le 2,4-hexadiène, l'acide (2*E*)-2,4-pentadiénique, l'acide sorbique et ses esters, l'acide 2,4-hexadiène-1,6-dicarboxylique et ses esters, le 1,3-cyclohexadiène, le 1-méthoxy-1, 3-cyclohexadiène, l'anthracène, les furanes substitués et non substitués, les thiophènes substitués et non substitués, les cyclopentadiènes substitués et non substitués, le (*E*)-1-méthoxy-3-triméthylsilyloxy-1,3-butadiène, le 1-(triméthylsiloxy)-1,3-butadiène, le 1-(triéthylsiloxy)-1,3-butadiène, le (1*E*,3*Z*)-1-méthoxy-2-méthyl-3-(triméthylsilyloxy)-1,3-pentadiène.

6. Procédé selon l'une quelconque des revendications précédentes, **caractérisé en ce qu'**un dithioester contenant un ou plusieurs substituants hétéroaromatiques et/ou un ou plusieurs substituants phosphonate dans le radical acide est utilisé en tant que substance régulatrice, notamment un des composés

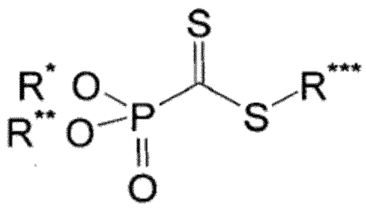

et/ou

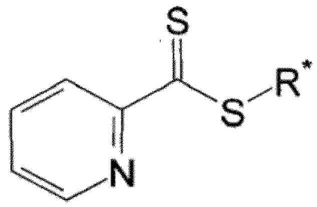

.

7. Matériaux adhésifs de contact comprenant des polymères à base d'acrylate, **caractérisés par** au moins un composant cyclo-1-X-hex-3-ène dans les chaînes polymères, avec X = S, 0 et/ou N.

8. Matériaux adhésifs de contact selon la revendication 7, **caractérisés par** au moins deux composants cyclo-1-X-hex-3-ène dans les chaînes polymères, avec X = S, 0 et/ou N.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9801478 A1
- WO 9931144 A1
- EP 1626994 A1
- WO 2011101175 A
- DE 102004044086 A1
- US 20030068492 A1
- EP 1978069 A1


### In der Beschreibung aufgeführte Nicht-Patentliteratur


- *Angew. Chem. Int. Ed.,* 2004, vol. 43, 1691
- *Polymer,* 2006, vol. 47, 6970
- **BOUSQUET ; BARNER-KOWOLLIK ; STENZEL.** *Journal of Polymer Science Part A: Polymer Chemistry,* 2010, vol. 48 (8), 1773-1781
- **DONATAS SATAS.** Handbook of Pressure Sensitive Adhesive Technology. van Nostrand, 1989
- **T.G. FOX.** *Bull. Am. Phys. Soc.,* 1956, vol. 1, 123
- *Synth. Communications,* 1988, vol. 18, 1531-1536
- *J. Pol Sci.: PartA: Pol. Chem.,* 2009, vol. 47, 6053
- *CHEMICAL ABSTRACTS,* 25322-68-3
- *CHEMICAL ABSTRACTS,* 69102-90-5
- *CHEMICAL ABSTRACTS,* 201611-92-9
- *CHEMICAL ABSTRACTS,* 13963-57-0